Europäisches Patentamt

European Patent Office

Office européen des brevets

(11) Publication number: **0 083 396**
A1

# (12) EUROPEAN PATENT APPLICATION

(21) Application number: 82109187.3

(22) Date of filing: 05.10.82

(51) Int. Cl.³: **G 11 B 7/24**, B 41 M 5/26

(30) Priority: 31.12.81 US 336525

(43) Date of publication of application: 13.07.83
Bulletin 83/28

(84) Designated Contracting States: DE FR GB

(71) Applicant: International Business Machines Corporation,
Old Orchard Road, Armonk, N.Y. 10504 (US)

(72) Inventor: Ahn, Kie Yeung, 639 Quaker Street, Chappaqua
New York 10514 (US)
Inventor: Lynt, Harold Nathaniel, Jr., Hiram Road, Cold
Spring New York 10516 (US)
Inventor: Jipson, Victor Burr, RFD No 3 Hill Street,
Mahopac New York 10541 (US)

(74) Representative: Chaudhry, Mohammad Saeed, IBM
United Kingdom Patent Operations Hursley Park,
Winchester Hants, S021 2JN (GB)

(54) An optical storage medium.

(57) An optical storage medium for storing binary data adapted to be written upon by a laser forming an array of encoded spots is composed of a substrate (10) preferably covered with a mirror layer (15) and including a matrix of a transparent dielectric material (14) such as a polymer upon which a vacuum deposited discontinuous film (11) on nucleated metallic islands is deposited having thicknesses of less than about 100. The particles extend up to 1000 Å transversely generally parallel to the surface of said substrate (10). The islands are separated by a short distance for facilitating coalescence of particles together to effect writing of spots at low energy by the lateral motion and gathering of the islands during heating of the islands by a laser beam or the like. Each spot represents a data bit in a binary position code. The matrix material has low thermal conductivity and preferably a low melting point to facilitate writing at low energy.

0083396

# AN OPTICAL STORAGE MEDIUM

This invention relates to an optical storage medium for storing binary data by forming coding spots in the medium by a focussed high energy intensity beam.

Interest in the development of optical data storage systems has been stimulated recently by the introduction of optical video disk systems and the continued improvement in potentially inexpensive GaAlAs laser diodes. One of the major obstacles to the introduction of these systems is the development of suitable optical storage materials. A candidate material should exhibit; 1) low writing energy (compatibility with GaAlAs lasers), 2) long lifetime and 3) low cost. Several material systems have been investigated including (A) Thin Metal Films, D. Mayden, Bell Systems Technical Journal 50, 1761 (1971); and P. Kivits, P. Zalm and R. DeBont, OSA/IEEE Conference on Laser and Electrooptic Systems, San Diego, CA. (February 1980) (unpublished); (B) Organic Dyes, V. Norotny and L. Alexandra, Journal of Appl. Polymer Science, 24, 1321-1323 (1979); V. B. Jipson and C. R. Jones, SPIE Proceedings, Infrared Dyes for Optical Storage, J. Vac. Sci. Technol., 18 No.1 105109 (Jan/Feb 1981); (C) Dye Loaded Polymers, D. G. Howe and J. J. Wrobel, Solvent-Coated Organic Materials for High Density Optical Recording, J. Vac. Sci. Technol. 18 No. 1 92-99 (Jan/Feb 1981); (D) Metal Loaded Polymers, J. Drexler, "Drexon Optical Memory Media for Laser Recording and Archival Data Storage" J. Vac. Sci. Technol. 18 No.1 87-91 (Jan/Feb 1981), T. W. Smith and A. T. Ward, Materials Research Society Meeting, Boston, Mass., (November 1980) (unpublished); and (E) bilayers, R. C. Miller, R. H. Willens, H. A. Watson, L. A. D'Asaro and M. Feldman, The Bell System Technical Journal, 58, 9, (1979).

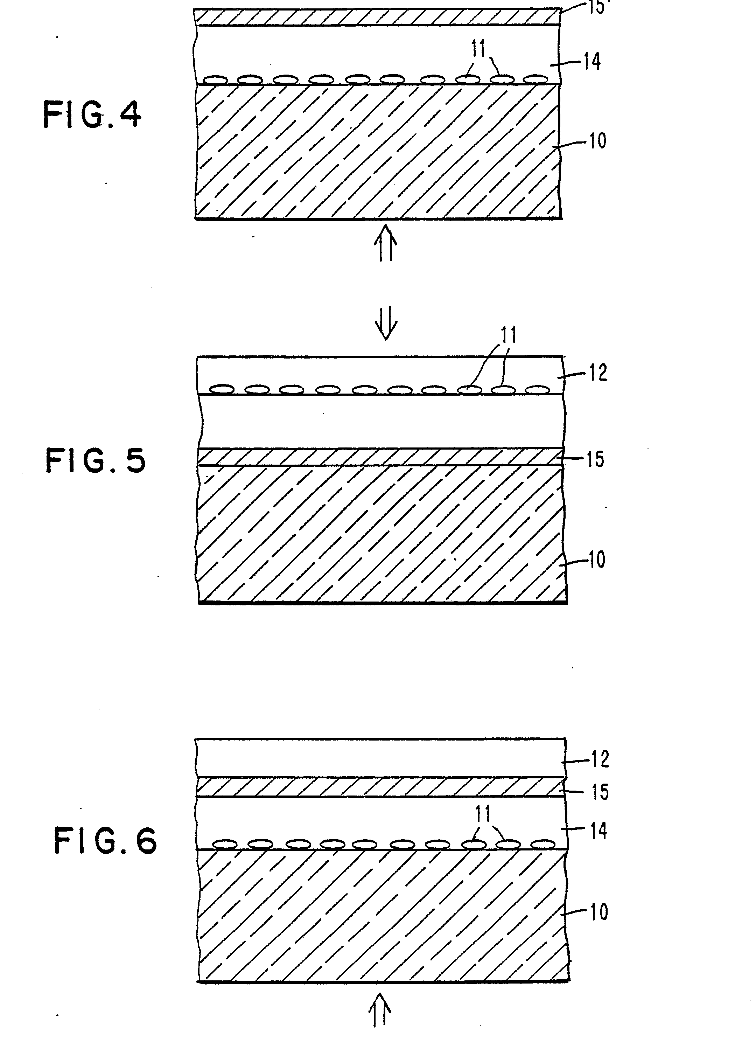

U.S. Patent 4,252,890 entitled "Imaging Systems Which Agglomerates Particle Material" describes in connection with FIG. 6 a method of forming an optical image by using a substrate of polyethylene terephthalate coated with a microscopically discontinuous layer of an amorphous selenium imaging material 0.2 micrometer thick to produce an image by agglomeration or fusing, of the selenium layer into particles in response to illumination of the medium with a source of energy greater than 0.2 joule/cm$^2$ through a mask. The result was a faithful image of the mask. At an energy level above 0.3 joule/cm$^2$ the selenium was evaporated in the areas illuminated through the mask. Useful coating materials are selenium, arsenic, silver, cadmium, zinc, tellurium, and radiation absorbing pigments and dyes.

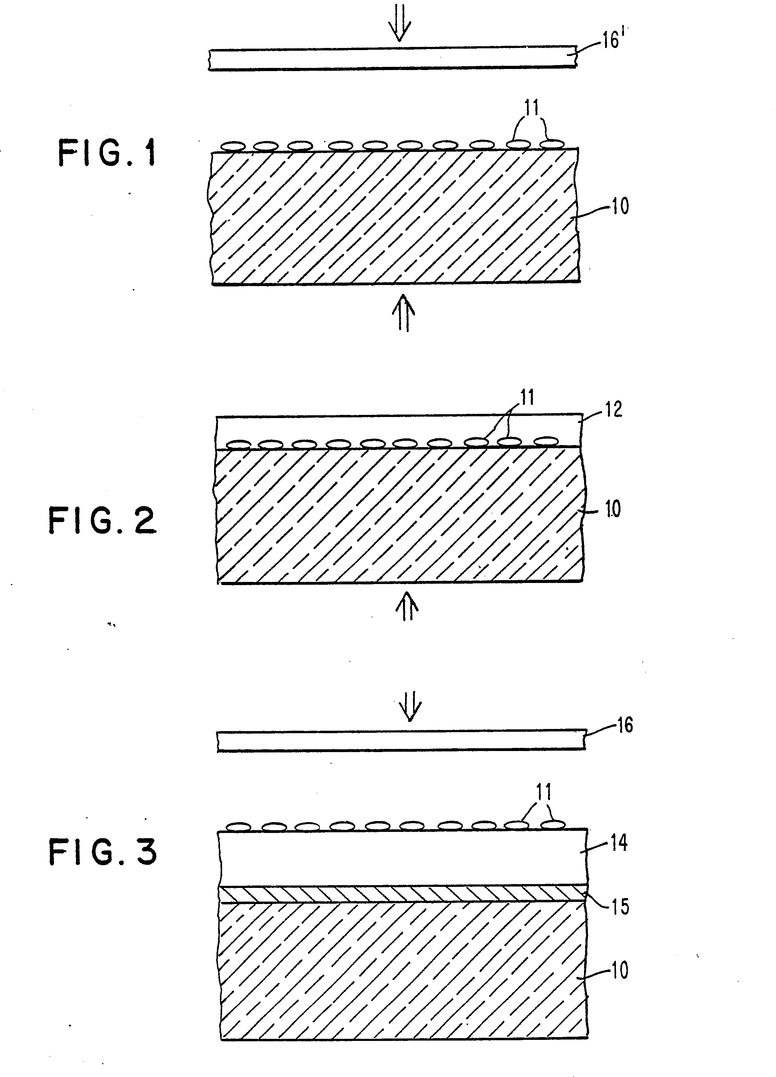

U.S. Patent 4,188,214 entitled "Recording Material" describes a laser recording material involving use of a recording medium of two materials, one of which is metal and the other of which is a compound such as a metal sulfide other than GeS, a metal fluoride or metal oxide. In this Kido patent it is suggested that the metal layer be a single layer formed of a mixture of the metals such as Au, Pt, Rh, Ag, Al, Ti, Cr, W, Cu and Te as well as many others cited in Col. 2 of this Kido patent, which are less relevant to the instant invention. No suggestion of the concept of using a polymeric or organic matrix to support the metal particles was suggested. FIG. 3 shows particles of metal supported in a matrix of the compound. The compounds are employed because of their energy absorbing characteristics to pass heat into the metal particles to increase the sensitivity of the recording material. Also, the compounds have a higher melting point than the metal materials which are more reflective. The compounds are also more stable chemically and not hygroscopic. The method of operation of the recorder is to deform or evaporate the medium.

U.S. Patent 4,069,487 describes coating of an optical storage layer with an organic or inorganic layer for protection. In FIG. 6 of that patent, the optical storage layer is a laminate of a non-metallic layer and a metallic layer which combine to form a recording layer.

According to the invention there is provided an optical storage medium for storing binary data by forming coding spots in the medium by a

YO9-81-046                                          2

focussed high intensity energy beam, characterised in that the medium
comprises a substrate of a matrix material having a low melting point and
a discontinuous thin film layer of particles of an energy absorbing
material on said substrate, said thin film layer having islands of the
energy absorbing material whereby focussed energy can be directed to heat
individual ones of said particles to cause a change in the reflectivity
of said medium to record information at the sites where heating has
occurred.

Preferably the film is a noble metal selected from the group consisting
of gold, silver, copper, platinum, palladium, and rhodium.

The Drexler reference describes a recording medium commercially available
which includes metal particles carried in a polymer matrix on a flexible
disk with the particles dispersed in a film similar to an exposed
photographic emulsion.

Drexler uses dispersed particles of metal rather than a single
discontinuous thin film of metal. Further, the particles are dispersed
randomly, whereas in accordance with the instant invention, there are
islands of metal in a single discontinuous layer. Furthermore, the
amount of metal included in the medium is far greater in quantity in the
Drexler media since it is dispersed throughout the thickness of the
medium. Such a configuration tends to promote eruption of the particles
from the medium causing ablation or vaporization of the medium. In
contrast, the thin films of nucleated metal used in accordance with this
invention are deposited by vacuum deposition techniques such as
evaporation, sputtering, or electron beam thermal deposition techniques.
These thin films coalesce rather than erupting.

In this invention the thermoplastic melts when the energy absorbing
(metal) material is heated by the laser beam. Furthermore, the thin film
of the metal layered with the plastic is clearly different from a
dispersion of the metal in the plastic. In this invention, the

YO9-81-046                              3

individual particles are rapidly heated by the incident laser radiation inducing localized particle coalescence which results in sufficient optical contrast for data storage. The contrast mechanism of U.S. Patent 4,252,890 of Howe differs substantially in scale (thicknesses of about .001 to about .01μm in accordance with this invention as compared to .01 to 2μm in Howe). Applicants also teach the use of noble metals such as gold in view of their improved stability whereas U.S. Patent 4,252,890 describes use of much less stable materials and is addressing the application of forming photographic types of images as contrasted with recording data on an encoded data storage medium.

The medium embodying the present invention includes particles of small size composed of islands of an energy absorbing mate ial dispersed in a thin interior or exterior thin film layer of the particles juxtaposed with each other with small spacings whereby focussed energy can be directed to heat individual ones of the particles to cause a change in the reflectivity of the medium to record information at the sites where heating has occurred. Preferably the thin film layer is composed of a metal selected from the group consisting of gold, silver, copper, platinum, palladium and rhodium. Preferably, the thin film layer is selected from the group of noble metals of gold, platinum, palladium and rhodium, and the thin film layer is composed of particles ranging in thickness from about .001 to .01 micrometers and the particles range from about 0.0025 to 0.1 micrometers wide. Preferably, a radiation reflecting layer is juxtaposed with the thin film layer separated by an intermediate layer having a thickness equal to 1/4 wavelength of the radiation to be applied to the medium.

In general, then it is preferred that the energy absorbing material of this invention comprises particles of gold ranging in thickness from about 0.001 to about 0.01 micrometers and in width from about 0.0025 to about 0.1 micrometers. A dust cover can be provided to protect the energy absorbing material. Preferably, a reflective layer is juxtaposed with a thin film layer separated therefrom by an optically transparent layer. The energy absorbing material comprises particles of gold on the order of about 0.003 micrometers thick and about 0.005 to 0.01 micrometers in diameter. Preferably, the medium is applied with a density such that less than 4mg of gold is required for an area equivalent to a twelve inch diameter optical disk. The energy absorbing medium is transformed by laser writing to form marks characterised by particle sizes of about 0.02 to 0.04 micrometers in size. The particles are preferably prepared by means of vacuum deposition by a method including thermal evaporation, sputtering and ion-beam deposition and the substrate comprises a material selected from polymethyl methacrylate (PMMA), glass, polycarbonate and aluminium.

The invention will now be described by way of example with reference to the accompanying drawings in which:-

FIG. 1 is a schematic drawing of an enlarged section of a storage medium in accordance with this invention;

FIGS. 2 to 6 are modifications of the storage medium of FIG. 1 and are all in accordance with this invention;

FIGS. 7.1 to 7.4 are TEM images of Au particles deposited in a discontinuous form in ccordance with this invention. The thicknesses of the films vary from 10 for FIG. 7.1 to 40 for FIG. 7.4;

FIG. 8.1 is a graph of reflectivity (in percentage of reflection) vs. wavelength for five different film thicknesses;

FIG. 8.2 is a graph of the percentage of transmission of light vs. wavelength for the same samples as FIG. 8.1;

FIG. 9 is a graph of reflectivity vs. wavelength for a trilayer structure in accordance with one aspect of this invention;

FIG. 10 is a graph of fifty percent of threshold power vs. thickness of a gold film deposited upon the substrate in accordance with one aspect of this invention;

FIG. 11 is a graph of pulse power vs. pulse width for a number of different optical storage structures in accordance with the prior art and in accordance with this invention, respectively;

FIG. 12 is a scanning electron micrograph of images of spots written on a discontinuous gold medium made in accordance with this invention;

FIG. 13 is a graph of relative contrast vs. power of the laser beam for comparison of a film of gold with a film of tellurium;

FIG. 14 is a high magnification of a transmission electron micrograph of two spots written on a gold medium; and

FIGS. 15.1 to 15.4 are graphs of optical energy levels as a function of time for reflection and transmission of the energy for two writing pulses with different levels of power.

An ideal optical storage medium would have optical absorption properties like those of metals and thermal properties like those of polymers in that they possess low thermal conductivity. An effort to achieve that objective is manifested in the designs of FIGS. 1-6.

In FIG. 1 a substrate 10 is coated with a thin discontinuous film of islands of reflective metallic particles 11. Islands 11 are about 25 to 1000 Angstroms wide and 10 to 100 Angstroms thick (.001.01µm thick and .0025 to .1µm wide).

Alternative metals can be used for film 11, but they must be reflective. Gold is the preferred material and because of the extremely small amount of gold employed, the cost is low. Alternative metals are silver,

YO9-81-046          6

copper, platinum, palladium and rhodium. All of the metals are noble metals or extremely stable. The particle sizes are on the low side for Pt, Pd and Rh, yet they offer excellent stability and larger sizes of particles of Cu, and Ag permit their use as an economical substitute for gold. When recording is performed a high intensity energy beam such as a laser is directed upon the metallic particles which absorb the energy and become heated. The localised heating forms a coalesced spot in which the metallic particles join together or agglomerate greatly reducing the space through which particles are dispersed. We have discovered that the reflectivity afforded by the film of particles is reduced very significantly. The temperature of the particles is controlled by the properties of the substrate 10. The thermal conductivity of the active media is dominated by the substrate 10 since the metallic film 11 is discontinuous and the optical absorption properties are attributable to the properties of the metallic film 11.

The substrate 10 should be composed of a material which is compatible with the support of layer 11 and if the light for writing data on the storage medium is to be applied from below the substrate through it to heat the layer 11, then the substrate material must be transparent. A transparent substrate 10 could be composed of PMMA, glass, fused quartz and other suitable materials. The thickness of the substrate could be on the order of 1 mm (1000µm). Preferably, the substrate is glass or a plastic such as PMMA. In addition, if light is exposed to the upper surface of the medium shining down on layer 11, then there should be a dust cover 16 which keeps dust from collecting on the surface of layer 11. In this case, the substrate could be of any material of suitable flatness and surface quality and need not be optically clear.

In the case of FIG. 2, the structure of FIG. 1 has been modified by the addition of a layer 12 of a plastic material such as PMMA which preferably is clear optically and non-birefringent. Preferably, in this case light is applied to the metal layer 11 from the back side of the substrate as indicated by the arrow.

YO9-81-046                                    7

FIG. 3 shows another modification of the structure of FIG. 1 wherein there is a reflective layer 15 composed of a mirror like material such as Al, Ti, Cr, (or Au, Pt, Rh which are expensive for that purpose). The layer 15 is preferably about 500 to 1000 Angstroms thick. Between the layer 11 and layer 15 is a layer 14 of a polymer or plastic material which is optically transparent and about 1/4 wavelength at the frequency of the laser used to write on the medium. For example, the layer 14 could be on the order of 1000-1400 Angstroms thick (0.1-0.14μm thick). Preferably, a dust cover 16 is provided so that light can be applied to the medium from the top without degradation of the image caused by dust particles since they are held away from the surface of the recording layer 11.

FIG. 4 shows a modification of the FIG. 1 and 3 structures to provide a reflection layer 15' on top of the spacer layer 14 with the reflective layer 11 of islands on a transparent substrate 10 which is adapted to have light shone through the back surface as illustrated by the arrow.

FIG. 5 is the same as FIG. 3 with the exception that a dust protection layer 12 has been deposited upon the layer 11 as in FIG. 2. FIG. 6 is the same as FIG. 4 with the exception that layer 12 has been applied on the top as in FIGS. 2 and 5.

The media of FIGS. 1 to 6 is exposed preferably by means of a laser such as a gallium arsenide laser with a wavelength from 780-880nm. Alternative lasers are HeNe-632.8nm, Kr-647.1nm, Ar-488nm and HeCd. The intensity is about 0.5n joule/micrometer squared. The duration of the laser beam applied to the media is 10 nanoseconds up to about 1 microsecond. The power of the beam is from 20 milliwatts down to about 1 milliwatt.

Tellurium is not a particularly good choice for the metal in these structures due to its poor lifetime qualities and low melting point. A better choice from a lifetime standpoint would be noble metals such as

YO9-81-046                                      8

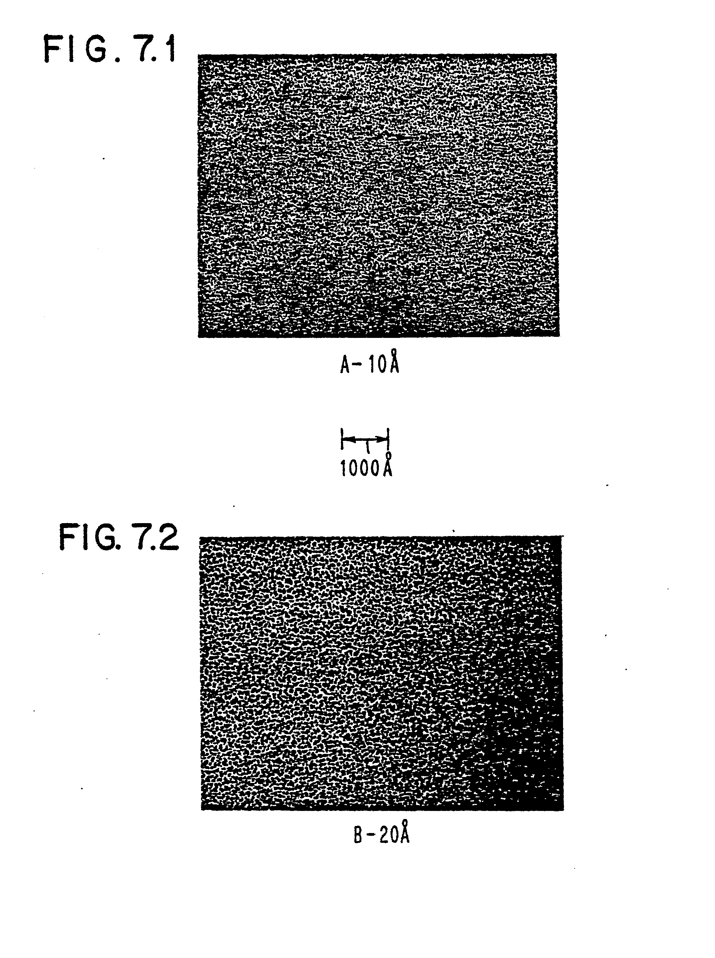

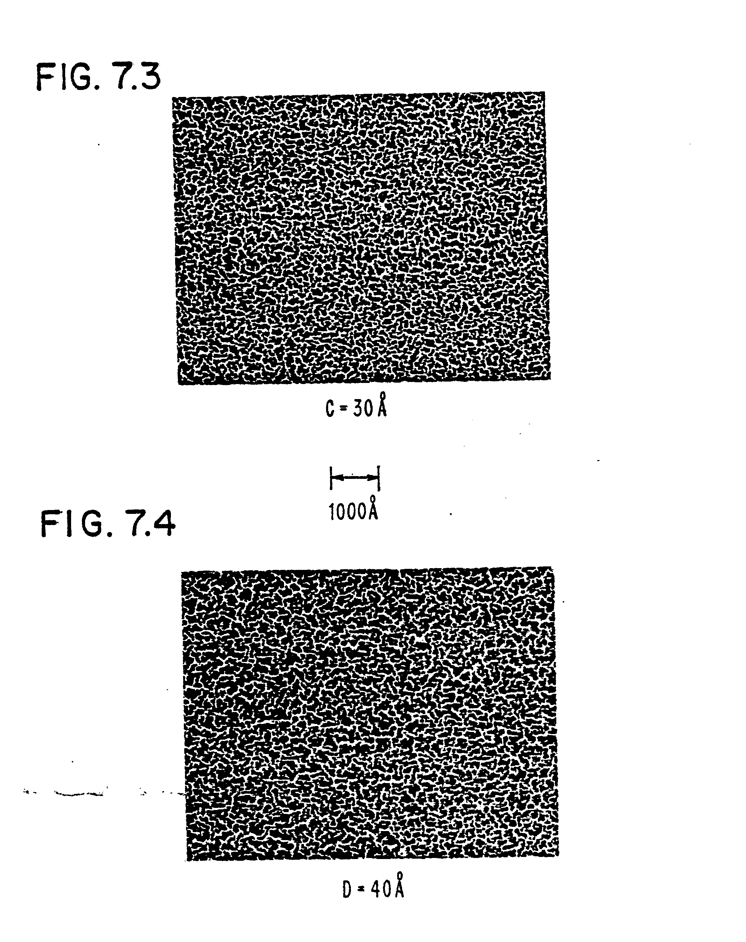

gold, platinum, rhodium or high stability alloys with suitable film nucleation properties. In FIGS. 7.1-7.4 we show the film nucleation properties of gold. It can be seen that this is a suitable material for this application. FIG. 7.1 shows a deposit of 10Å of Au on a carbon substrate with a scale of 1cm representing about 1000Å. FIG. 7.2 shows the pattern for 20Å of Au on a carbon substrate. FIG. 7.3 shows the pattern for 30Å of Au on a carbon substrate. FIG. 7.4 shows the pattern for 40Å of Au on a carbon substrate. Magnification is about 98000 times for each image. Our measurements and calculations indicate that about 30 Angstroms (0.003μm) of gold in a single polymer sandwich would result in an optimized optical structure exhibiting reflectivity changes of greater than 50% between the written and unwritten case. This represents a cost of less than 25c/12" disk for the gold. Many other metals are also appropriate for this process if their film nucleation properties are suitable. For instance, Ag, Al, Ti, Cr, W, Cu, etc., all provide lower cost than the noble metals. Of these Ag is known to form small nucleation islands. Al is of particular interest due to low cost and potentially high stability after surface oxide formation (this oxide is self limiting).

An extremely wide range of polymers exist which would be applicable to these structures. They would be selected for long lifetime, low thermal conductivity and low writing temperature. For fabrication ease polymers that can be glow discharge deposited are of special interest.

Fabrication of samples to date has included the solution casting of the thin polymer layers and thermal evaporation of the metal. This involves several steps. A more practical approach would be to use glow discharge techniques for the polymer deposition followed by thermal evaporation of the metal layer. In this way a multi-layered structure could be fabricated in a single vacuum chamber.

In summary:

1) Discontinuous metal films can be fabricated through the use of thin film nucleation mechanisms.

2) These structures have been successfully demonstrated. In particular we show that the thermal conductivity effects of the metal can be greatly reduced by using a discontinuous film. This will allow the use of more stable materials than tellurium as previously discussed.

3) A fabrication technique including the glow discharge deposition of the polymer with thermal evaporation of metals in a single chamber is proposed. This would allow the entire optical structure to be fabricated in one system with potentially high yield.

4) That since the metal loaded polymers are formed by a highly repeatable film nucleation process, they will be much more uniform than those obtained through solution casting techniques.

Here we consider the use of discontinuous metal films as the active layer in an ablative optical structure. We demonstrate that systems can be configured utilizing potentially stable noble metals as the active material while providing writing energies that are superior to tellurium based systems. The obvious goal of this work is to provide sensitivity without compromising lifetime.

The nucleation of thin films has been studied by several authors [K. L. Chopra, Thin Film Phenomena, McGraw Hill Book Company, (1969); D. W.

YO9-81-046                                    10

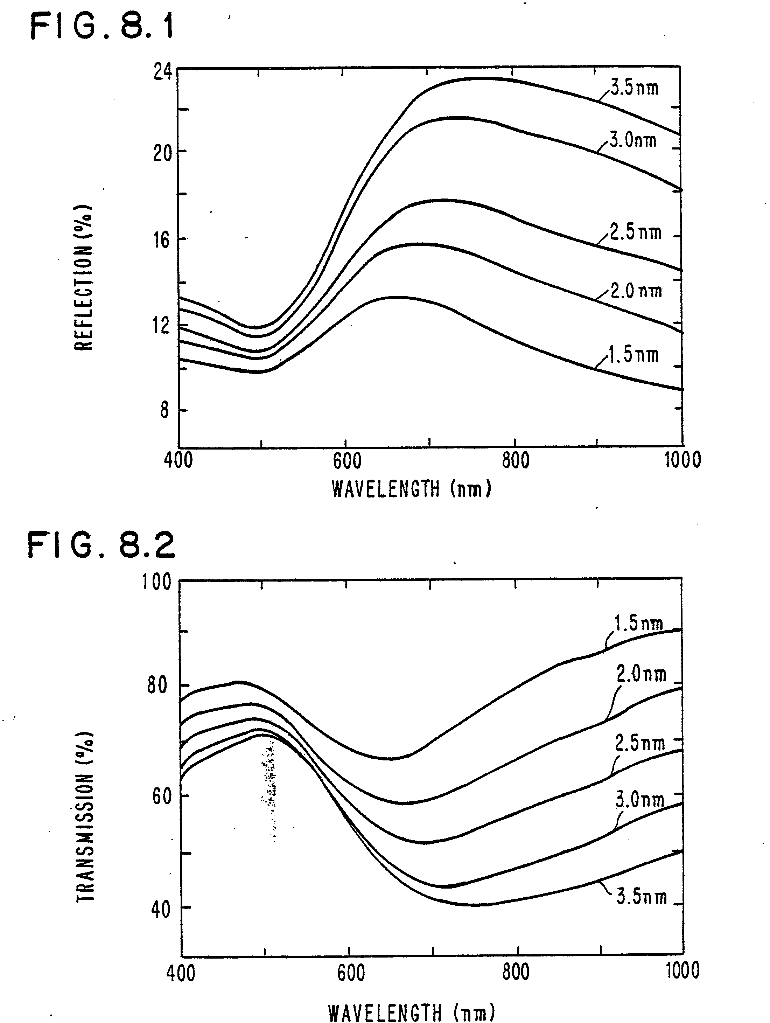

Pashley, M. J. Stowell, M. H. Jacobs and T. J. Law, Phil. Mag., 10:127, (1964)]. In particular the island formation of gold films below some critical thickness is well known. In FIGS. 8.1 and 8.2 respectively, the measured reflectivity and transmissivity of gold films on PMMA substrates are shown as a function of wavelength. For the deposition conditions employed here (1Å/sec deposition onto 25°C PMMA substrates at 5 x $10^{-7}$ torr), films 3.0nm thick or less form a discontinuous island structure with individual islands 5.0 10.0nm in diameter. For thicknesses above 3.0nm, rapid networking of the islands is observed. The optical absorption of discontinuous films (100% - R% - T% neglecting scattering effects) can be as high as 30%. This strong optical absorption coupled with a relatively high optical reflectivity make these films candidates for optical storage applications. This is particularly true when a trilayer structure is employed, [A. E. Bell and F. W. Spong, IEEE Journal of Quantum Electronics, 14, 497 (1973)]. This anti-reflection geometry dramatically increases the light absorption in the gold while providing high readback contrast.

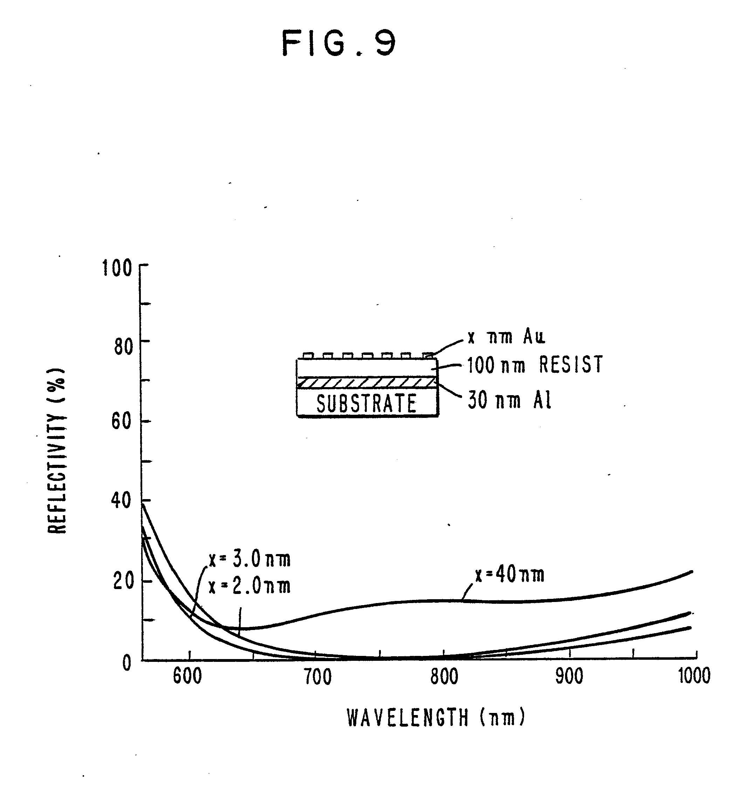

FIG. 9 shows the measured optical reflectivity from gold trilayers for varying gold thicknesses of 2.0, 3.0 and 4.0nm. The trilayer structure utilized is shown in the inset. The resist used is Shipley AZ1350J. For the 2.0 and 3.0nm films less than 10% of the incident radiation is reflected at wavelengths from 650 - 900nm. The 4.0nm film (an electrically conducting film indicating at least partial continuity) exhibits greater reflectivity at wavelengths above 650nm, but excellent optical coupling still exists.

The ability to couple optical energy efficiently into the ultra-thin gold layer is certainly desirable, but it does not insure that the film can be ablated at low energies. Trilayers with a continuous 7.5nm thick titanium active layer were found to require four times more energy than an equivalent structure using tellurium, [Bell et al supra and A. E. Bell and R. A. Bartolini, APL, 34, 275 (1979)]. There are two principle reasons for this increase. The melting point of titanium is more than 1000°C higher than for tellurium while its thermal conductivity is nearly an order of magnitude greater. Thus titanium must be heated to a much higher temperature in order for writing to occur, while at the same time losing more energy due to thermal diffusivity effects. Based on this comparison one would not expect gold trilayers to exhibit low writing energies. The melting point of gold while less than that of titanium is still 600°C greater than that of tellurium. Furthermore, the bulk thermal conductivity of gold is nearly two orders of magnitude greater than that of tellurium. This is somewhat offset by the discontinuous nature of the gold film which limits lateral thermal diffusivity, but typically it is thermal losses from the film to the substrate that are most significant. M. Chen, V. Marrello and W.Y. Lee, Materials Research Society Meeting, Boston, Mass., November 1980 (unpublished).

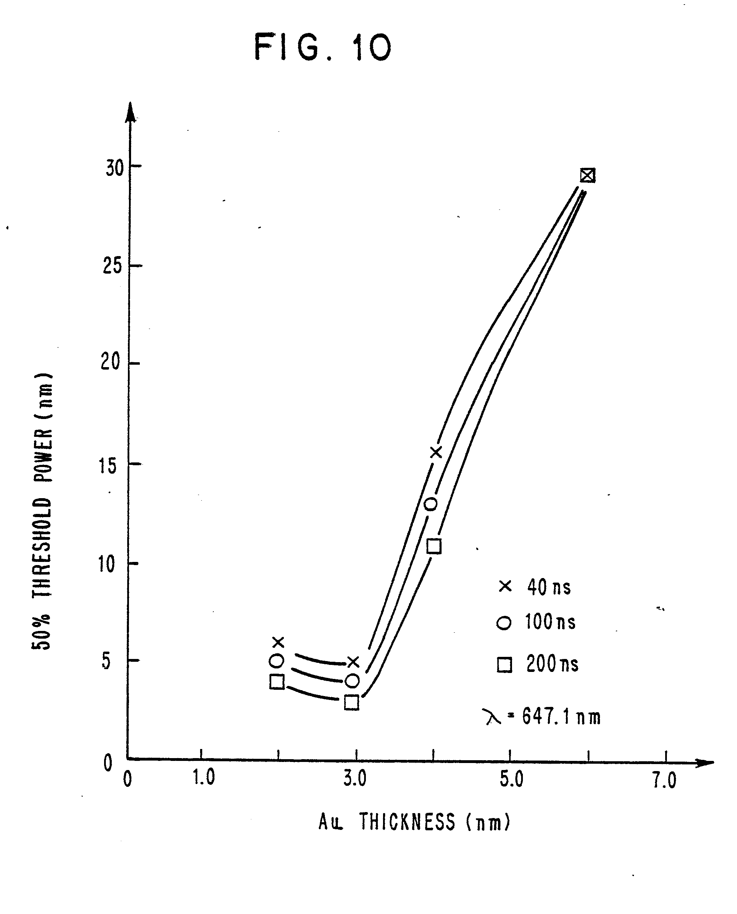

The optical writing characteristics of these films were studied using a microcomputer controlled static laser writer that incorporates a krypton laser ($\lambda = 647.1$nm) with a 0.6 N.A. focussing objective. In these tests, the optical reflectivity change at the surface was monitored as a function of writing power and pulse width. For comparison of the writing energy with other materials, we use the point at which the optical change induced in the material is 50% of the maximum change that is attainable through increased writing energy. The values of writing power vs. gold thickness for several gold trilayers as a function of gold thickness are shown in FIG. 10. Pulse width is a parameter. The structure compared is that shown in FIG. 9. From this it is evident that films above 3.0nm thick require significantly more writing energy. This corresponds to the point at which the discontinuous gold islands start to network into a continuous film. This rapid increase in writing energy cannot be explained by the gradual increase in optical reflectivity with thickness. Obviously the discontinuous nature of the film plays a major role in determining the writing energy. Furthermore, it should be noted that the writing energy of these structures is quite non-reciprocal with pulse duration indicating that shorter pulse durations will result in a reduction in writing energy. The minimum 50% contrast writing energy is

YO9-81-046                    12

seen to be 0.2nJ (5mw @40 nsec.) for trilayers using a photoresist layer
as the dielectric spacer.

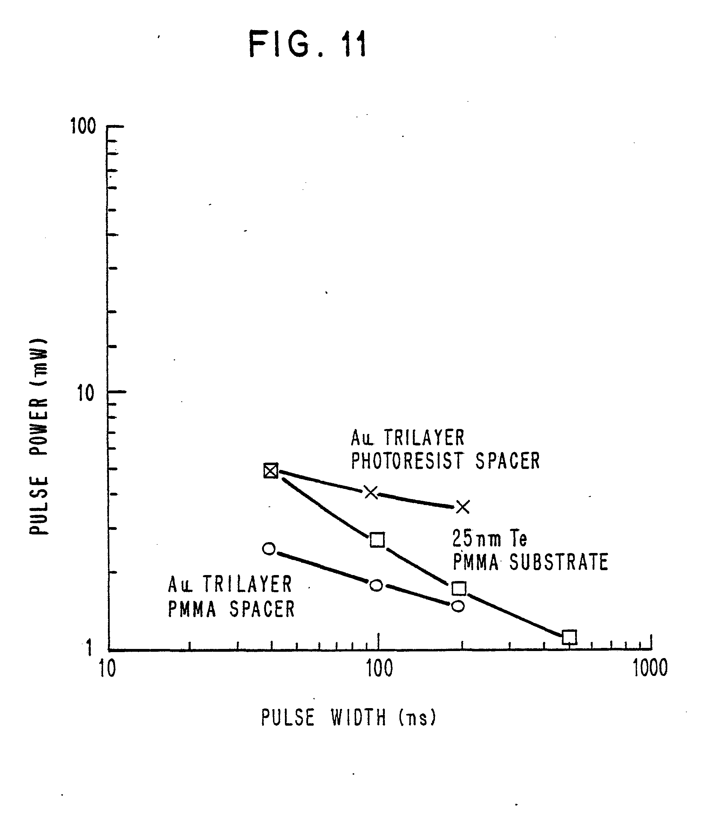

FIG. 11 shows a comparison of the writing power vs. pulse width curves
for gold trilayers using a photoresist spacing layer designated by (x), a
PMMA spacing layer designated by (o) and a 25nm tellurium layer on a PMMA
substrate designated by squares (□). In FIG. 11 the 50% writing power
vs. pulse duration for gold trilayers (2.5nm gold) is compared to similar
results for a 25.0nm tellurium film on a PMMA substrate. The
discontinuous gold trilayer utilizing a photoresist spacing layer
compares well with the results for tellurium only for short pulse
durations. However, when PMMA is utilized as the spacing material the
writing energy is reduced by a factor of two. This improvement can be
attributed to the low thermal conductivity of the PMMA. In this case the
discontinuous gold trilayer exhibits lower writing energy than tellurium
for pulse durations up to ⋏ 300 nsec. The 50% writing energy is 0.1nJ
for a 40 nsec. pulse duration. Non-optimized, totally encapsulated
samples using polymerized photoresist as both the spacing layer and
overcoat material have shown 50% writing energies of .6nJ (50 nsec.
pulse) using a GaAlAs laser radiating at 830nm. This value should be
significantly improved by utilizing materials such as PMMA for the
spacing and overcoat layer.

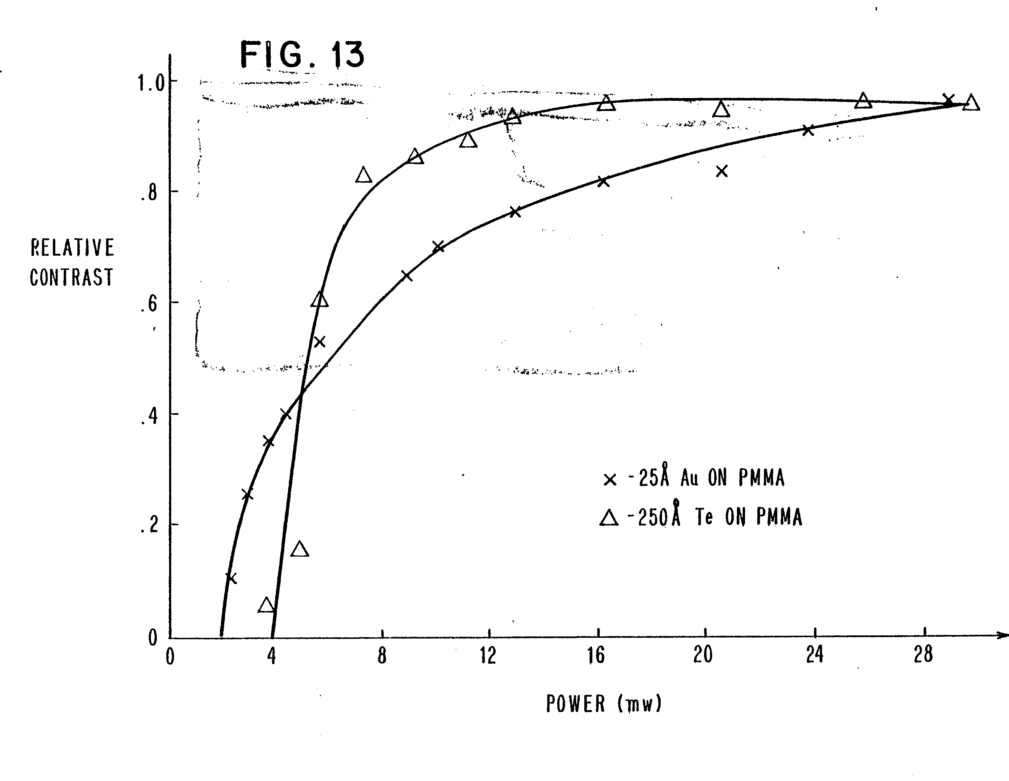

The low writing energy for this class of materials can be attributed to
the writing mechanism which we discussed below. However, regardless of
the actual mechanism, it seems clear that a positive driving force to
hole formation does exist. When a single discontinuous gold layer
(2.5nm) on a PMMA substrate is compared directly to a continuous (25nm)
tellurium layer (see FIG. 13), the gold exhibits a threshold writing
energy (zero optical contrast) that is a factor of two lower even though
roughly half as much energy is absorbed by the gold. However, for
relative contrast levels of 60%, the gold requires 50% more writing
energy. This result lends credibility to the belief that the

YO9-81-046                    13

discontinuous films have a more gradual spot forming process than continuous films.

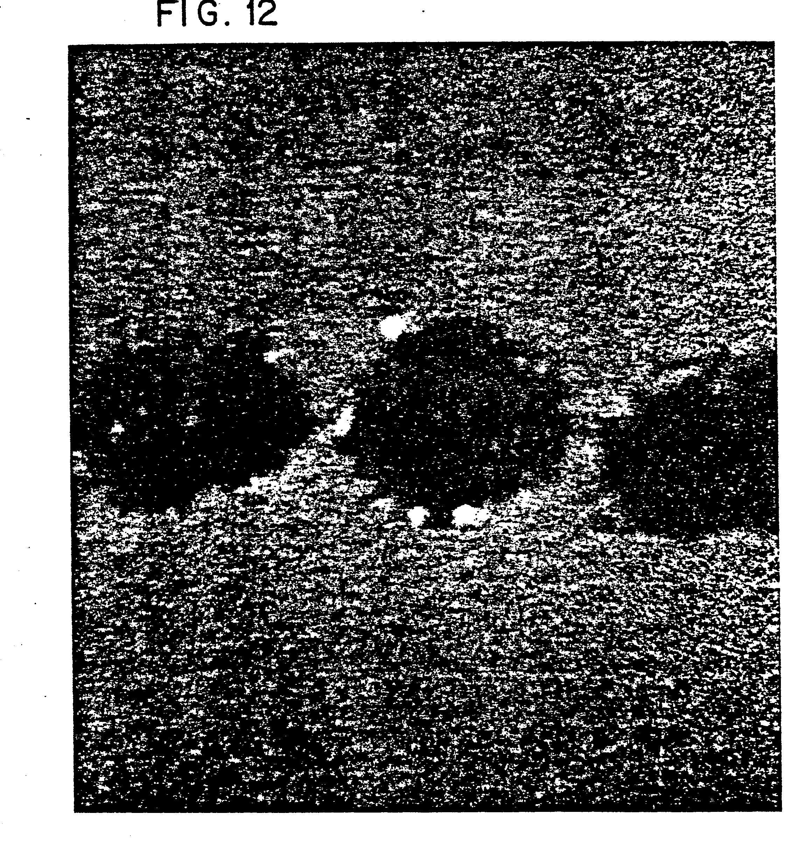

A scanning electron micrograph (SEM) image of spots written on a gold trilayer using a PMMA spacing layer is shown in FIG. 12. These spots were written with a 0.14nJ (3.5mw for 40 nsec., 647.1nm wavelength) pulse, and exhibit a relative optical contrast change of 70%. The image suggests that gold is still present within the written spots, but this is not clear. At lower writing energies, spots $\leq$ .5μm in diameter have been observed.

The second major criterion that a potential optical storage material must satisfy is adequate lifetime. By its nature, this property is more difficult to demonstrate. The fact that a noble metal is utilized as the active layer in these structures lends credibility to the potential lifetime from a corrosion point of view; however, it is not clear that the small particles will be stable. Possible degradation mechanisms include: 1) slow coalescence of the islands even at room temperature, 2) diffusion of the gold and 3) deterioration of the thin polymer layer. Slow changes in optical properties have been observed for discontinuous gold films on PMMA substrates at 75°C, however, thinner samples have demonstrated excellent thermal stability over a thousand hours at 65°C.

We have demonstrated that discontinuous gold films exhibit writing energies that are compatible with GaAlAs lasers. Possible writing mechanisms have been proposed with sintering of the 5.0 - 10.0nm islands being preferred at present. The lifetimes of these films are under study, and indications are that stable systems can be developed.

In the course of our investigation of optical storage materials we have found that discontinuous films behave fundamentally differently from continuous films. Metal loaded polymers operate through the use of film nucleation mechanisms. Such metal "particles" act as local absorbers that heat and ablate a polymer matrix.

YO9-81-046                                    14

In a continuous metal film a spot is written by first bringing the film to its melting point. However, this is insufficient to form a hole in general. This is due to an energy barrier to hole formation which depends on the surface energy of the various materials present, i.e., there is no positive driving force to cause the hole to open at the melting point.

We have found that in discontinuous films this is not the case. Here there is a net driving force that causes the particles to coalesce thus dramatically affecting the optical properties of the layer. In the case of small particles (as formed by thin film nucleation) this coalescence can proceed rapidly even at low temperatures if sufficient energy is provided to cause the individual particles to come into contact. For 50$\overset{o}{A}$ diameter Au particles it has been calculated by Pashley et al Philosophical Mag. 10, 127 (1964) that significant coalescence can occur in less than 1 nsec. (at 400°C) after the individual particles come into contact. Particles of this size can be fabricated in a single discontinuous layer by using thin film nucleation phenomena. Furthermore, if a layer of these particles is incorporated in a trilayer structure, up to 90% of the incident radiation can be absorbed by the particles. In its undisturbed state the layer is stable since there is insufficient energy for the individual particles to come into contact. However, when the spot is rapidly heated by a laser beam, random motion of the particles increases due to (1) higher temperature, (2) changes in the underlying layer (i.e., melting, glass transition or decomposition) and (3) high radial temperature gradients which act on the particles to push them preferentially from the centre of the spot. When the particles collide, coalescence occurs and as this happens the optical properties are changed.

Evidence for this mechanism was found when an SEM of an overburned spot on a Au trilayer (discontinuous film) showed Au balls coalesced within the spot. Spots of this type exhibit contrast changes as high as 15 to 1.

YO9-81-046                                    15

This hole opening mechanism is also suggested by the results shown in FIG. 13. Here we compare the writing characteristics of two films. The first is a 250Å thick Te layer on a PMMA substrate while the second is a 25Å thick discontinuous Au layer on a similar PMMA substrate. Due to the optical properties of the two films, only approximately half as much energy is absorbed by the Au layer. We note that the reflectivity change of the Au layer is much more gradual than for the Te. This indicates that as the centre of the spot is heated above its threshold, permanent damage is done over a relatively restricted region. However, for the Te case it is more of an all or nothing response. Due to the high thermal conductivity and melting point of Au one would expect a higher threshold energy than for the Te layer, even when the thickness differences are considered. The lower threshold observed can be attributed to (1) a positive driving force for hole information, (2) reduced lateral thermal conductivity because of the discontinuous nature of the film and (3) the fact that it is not necessary to melt the gold islands to cause them to coalesce.

Dramatic evidence of the importance of film discontinuity to writing energy is shown in FIG. 10. Here 50% writing thresholds for Au trilayer structures are shown as a function of the Au thickness. There is a rapid increase in writing energy for Au films greater than 30Å (3nm) thick. Experimental data from TEM studies and electrical conductivity measurements indicate that Au films start to be continuous for thicknesses greater than 30Å under the deposition conditions used. For all the samples shown in FIG. 10 (different Au thickness) the fraction of absorbed light varies relatively little and cannot account for the dramatic change.

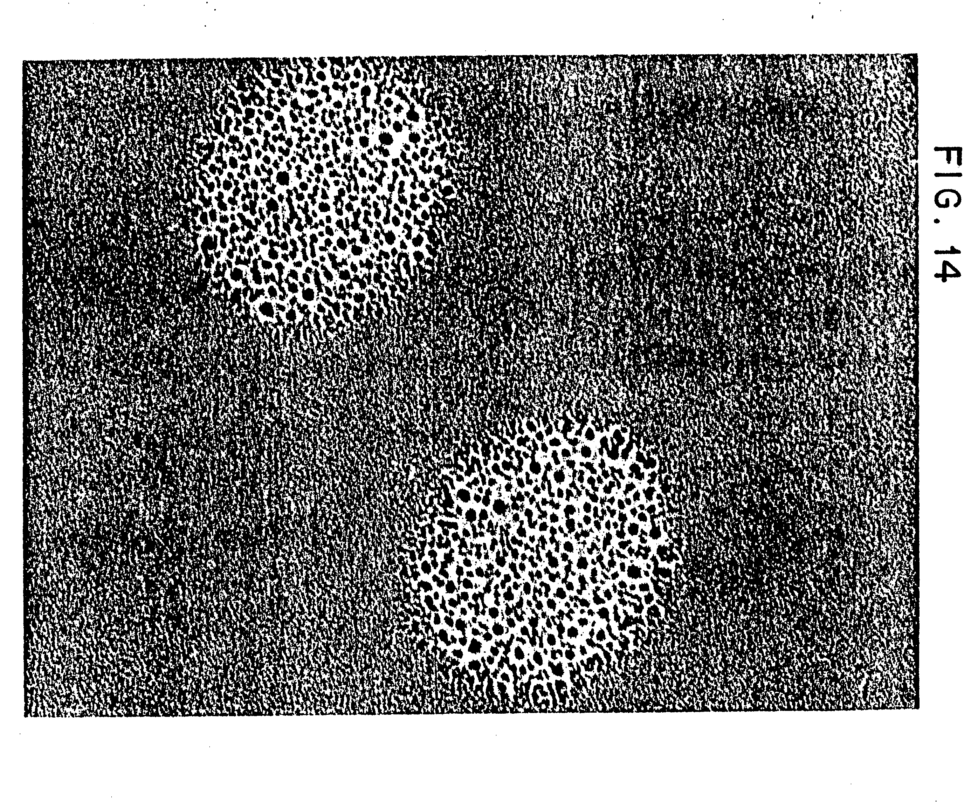

In FIG. 14 various Au trilayers utilizing different polymers as the spacing layer are compared with a 250Å Te film on PMMA from a 50% threshold writing point of view. We see than in almost all cases, the Au trilayers are superior. This is particularly true for short pulse

YO9-81-046                           16

durations ($\leq$ 40 nsec.) and one would expect this improvement to be greater for shorter pulses.

It is surprising that thin films of gold have writing energies comparable to those for tellurium or tellurium based alloys. The low thermal conductivity of tellurium (3.2 w/m°K) coupled with its low melting point (450°C) allow it to be ablated with a focussed laser beam of relatively low energy. However, it has been found that due to the nature of the hole opening process it is necessary to heat a local region of the film to temperatures well in excess of its melting point in order to create a hole in the film. This is particularly true if writing times of less than a few hundred nanoseconds are desired. Gold, on the other hand, has a much higher thermal conductivity (312 w/m°K) and a much higher melting point (1063°C) than tellurium and thus, if the writing mechanism were similar (i.e., hole burning through film melting and pullback), one would expect a relatively high writing energy. Indeed it has been shown that continuous gold trilayers (as distinguished from the discontinuous films of this invention) require much more writing energy than a 30.0nm tellurium film.

However, the writing mechanism for discontinuous gold films is quite different than it is for continuous films. In order to better understand the hole forming mechanism for this class of materials, written spots were examined by transmission electron microscopy. Samples were prepared by depositing 2.5nm of gold at 0.1nm/sec onto a photoresist layer. Under these conditions the gold film is found to be made up of slightly networked islands that are 5.0 to 10.0nm in size. Spots were written onto this sample using a krypton laser (.6 N.A. objective lens at a 647.1nm wavelength). The gold layer was then transferred to a carbon film and examined by transmission electron microscopy.

In FIG. 13 a high magnification transmission electron micrograph image of two written spots is shown. The hole size of approximately 0.6 micron indicates that these spots were written with about 1 nj of energy, (1mw,

YO9-81-046                                    17

100 nsec.). The film used was 30$\overset{\circ}{A}$ of Au on a polymer transferred to a carbon film for TEM examination. Within the written region relatively large spherical gold islands are visible while regions outside of the written spot are unchanged. It is interesting that the transition from the written to unwritten region is quite abrupt indicating that a temperature threshold to coalescence exists. This threshold is thought to be due to the necessity of breaking the initial gold islands free from the substrate material before rapid particle coalescence can occur.

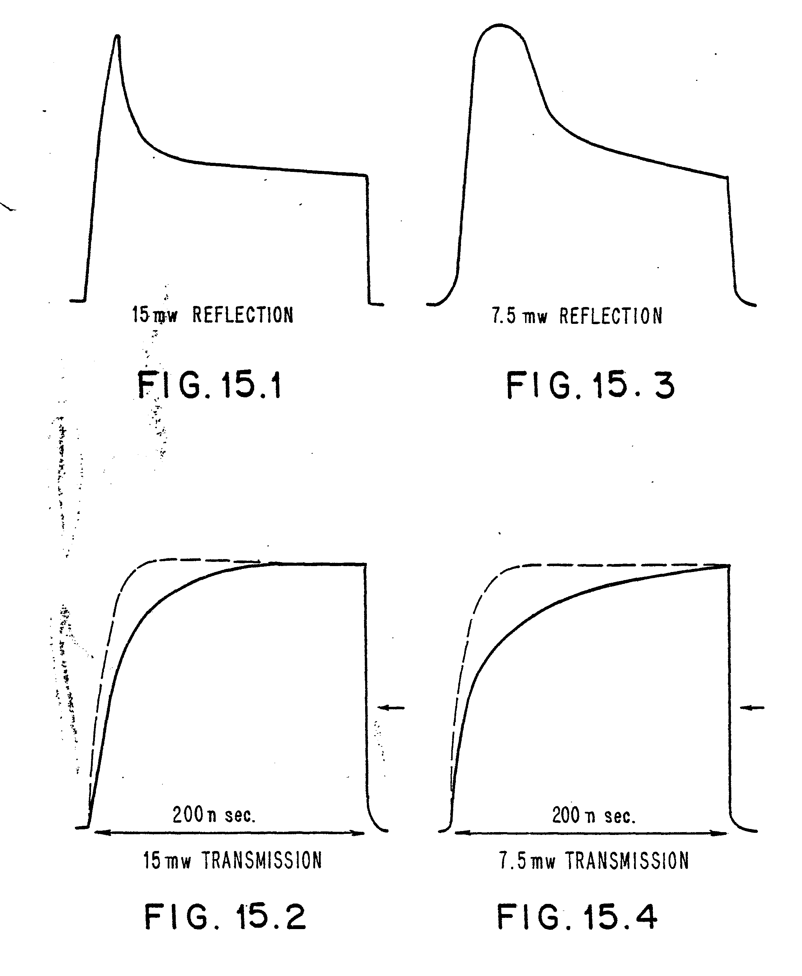

It is surprising that the sintering of particles as shown in FIG. 14 can occur as rapidly as required for optical storage applications. Initially the film consists of gold islands on the order of 5.0 to 10.0nm in size while the written region has particles on the order of 20 to 40nm in size. In FIGS. 15.1 - 15.4 the reflected and transmitted optical radiation is shown as a function of time for two write pulse powers. The onset of coalescence is seen to occur in approximately 20 nsec. for the 15 mw pulse employed in FIGS. 15.1 and 15.2. When the pulse power is reduced by a factor of two the onset of coalescence is seen to occur in approximately 50 nsec. In both cases the final reflectivity decreases by a factor of two in the final state, but the change occurs more rapidly at the higher power level.

The coalescence or sintering of small particles has been extensively studied both experimentally and theoretically. Pashley et al supra have shown by studying adjacent frames of cine, film recorded from a transmission electron microscope that relatively large gold islands (200.0 to 1000.0nm) at 400°C on a $MoS_2$ substrate can significantly coalesce in less than 60 nsec. Theoretical predictions assuming a surface diffusion driven sintering mechanism indicate that the rate of sintering should be inversely proportional to the particle radius to the fourth power. An approximate relationship for the rate of sintering is given by:

$$\frac{x^7}{r^3} = A\ (T)t$$

YO9-81-046                                18

where x is the radius of the neck that forms between two particles, r is the particle radius, t is the time and A(T) is given by:

$$A(T) = \frac{64\,\gamma\,Ds\,(\mu)}{kT}$$

where $\gamma$ is the surface energy of the particle, T is the temperature, k is Boltzman's constant, Ds is the surface diffusion coefficient and $\mu$ is the atomic volume. More detailed calculations have been carried out, but the above is an approximation for $x/r < .4$.

Using the above relationship and the properties for gold one would predict that 5.0nm radius particles would coalesce to $x/r=.1$ in about 10.0 nsec. at a temperature of 400°C. Obviously the particles in FIG. 15 have coalesced to a much greater extent than $x/r=.1$, however, this is not surprising since the temperatures involved are certainly greater than 400°C based on thermal modelling considerations. To the first order in temperature, the parameter A(T) is given by:

$$A(T) = \frac{ce}{kT}^{-Qs/kT}$$

where c is a constant of the material and Qs is the activation energy for surface diffusion. For activation energies from 1-2 ev a 100°C increase in temperature above 400°C will result in a 1-2 order of magnitude increase in the sintering rate.

As particles coalesce the average particle size increases and thus one would expect the rate of coalescence to decrease if the temperature remains constant. The reflectivity during writing results shown in FIGS. 16.1-16.4 provide some evidence of this. From these curves it is seen that after coalescence begins there is a rapid drop in optical reflectivity with the first 10.0-20.0 nsec. followed by a much more gradual decrease. However, this response can also be at least partially attributed to the fact that as the reacted spot size increases, it does so in a region where the light intensity is lower and a smaller change in reflectivity is expected.

From the experimental observations presented, the writing process appears to proceed as follows: 1) the incident laser radiation is absorbed by the individual gold islands resulting in a rapid temperature rise of the particles and the underlying substrate, 2) above some threshold temperature the gold particles are freed from the substrate and begin to migrate about the surface, 3) particles which come into contact rapidly sinter into a single larger particle and 4) as sintering continues less energy is absorbed due to the local reduction in optical absorption that occurs within the region of coalescence.

There are several novel features of this writing mechanism when compared with the writing process for continuous metal films. While it is possible that the melting point of gold is reached during the writing time (especially when short writing times are used) it is not a necessary condition. Continuous films, on the other hand, require that the melting point of the metal be reached. In fact, for short writing times, calculations (P. Kuits, J. Vac. Sci. Tech., 18(1) 68 (Jan/Feb 1981) indicate that superheating occurs. For discontinuous films the minimum written spot size is controlled by the island size while continuous films exhibit a minimum hole size that is a function of the film thickness, the surface energy of the substrate and the surface energy of the metal. Finally, discontinuous films form written spots as a gradual process that proceeds from the hottest regions while continuous films exhibit a more binary hole opening process.

The potential advantages of using discontinuous metal films (especially small islands) are obvious:

    (1)   The positive driving force toward particle coalescence results in low writing energies.

(2) Low writing energy can be obtained using even relatively high melting point - high thermal conductivity materials. For instance, the melting point of gold is 600°C greater than the melting point of Te while its thermal conductivity is two orders of magnitude higher, and yet it can be made to exhibit a low writing energy threshold. This allows one to use stable materials such as the noble metals Rh, Pt, Au or highly stable alloys or any other thin film that exhibits proper film nucleation.

(3) Minimum spot size is controlled by the film island size and for optical recording minimum spot size is not a factor.

(4) Since very little material is moved to write a spot, overcoats will not greatly affect the writing energy. This has been shown using an encapsulated Au trilayer at GaAs wavelengths.

(5) If the writing mechanism is indeed a solid state reaction, the melting point is no longer significant. Writing energy can be optimized by controlling the island size/spacing, the island mass, selecting high surface diffusivity and surface tension materials for the absorber and low melting/decomposition polymers with low surface energy as the spacing layer in a trilayer or as a substrate in a single film.

This application discusses the theoretical and experimental advantages of discontinuous films for optical storage applications. A particular structure (Au trilayers with various polymers as the spacing layer) is shown that exhibits a factor of two (40 nsec. pulse) improvement in the writing energy when compared to a conventional 250 Te on PMMA structure. A novel mechanism for writing is described which, if correct, will allow this structure to be further optimized using techniques described. The laser writing characteristics of discontinous gold films are interesting since; 1) the writing energy is compatible with GaAlAs lasers, 2) the active layer is potentially archival since a noble metal is utilized, and 3) the resolution of the material is well above the resolution achievable with visible light. Writing energies of less than 0.5 nanojoules per spot have been achieved using a GaAlAs laser emitting at 840nm. In its initial form gold films approximately 2.5nm thick with individual islands 5.0 to 10.0nm in size have been utilized. Subsequent work has allowed the use of thicker films with improved optical properties; however, for these films the individual island size is increased to 20.0 to 50.0nm. Since the written spot is approximately 1000.0nm in diameter it can be seen that the initial particle size is relatively small and thus should not affect the film resolution.

In conclusion, it has been demonstrated that laser induced coalescence of gold particles can provide sufficient optical contrast for optical storage applications. The initial island size of say 5.0-10.0nm is increased to 20.0-40.0nm within the written region. This results in at least a factor of two reductions in optical reflectivity with a commensurate increase in optical transmission. The onset of coalescence was seen to occur in less than 25 nsec. when a 15 mw optical pulse was employed (.6 N.A. objective and a 647.1nm wavelength). This time appears to be at least consistent with the theoretical predictions for the sintering of small particles when the particle size and temperature are considered.

- 23 -

While the final cost of an optical disk based on discontinuous films is difficult to predict, the high cost of noble metals is not a major factor. A 12" optical disk would require less than 4.0 mg of gold.

CLAIMS

1.  An optical storage medium for storing binary data by forming coding spots in the medium by a focussed high intensity energy beam, characterised in that the medium comprises a substrate (10) of a matrix material having a low melting point and a discontinuous thin film layer (11) of particles of an energy absorbing material on said substrate, said thin film layer having islands of the energy absorbing material whereby focussed energy can be directed to heat individual ones of said particles to cause a change in the reflectivity of said medium to record information at the sites where heating has occurred.

2.  A medium in accordance with Claim 1, wherein said thin film layer is composed of a metal selected from the group consisting of gold, silver, copper, platinum, palladium and rhodium.

3.  A medium in accordance with Claim 1 or 2, wherein said thin film layer is composed of particles ranging in thickness from about .001 to .01 micrometers.

4.  A medium in accordance with Claim 3, wherein said particles range from about 0.0025 to 0.1 micrometers wide.

5.  A medium in accordance with any one of the preceding claims, wherein a radiation reflecting layer is juxtaposed with said thin film layer separated by an optically transparent layer having a thickness equal to 1/4 wavelength of the radiation to be applied to said medium.

6.  A medium in accordance with any one of the preceding claims, wherein a dust cover is provided to protect said energy absorbing material.

7.  A medium in accordance with any one of the preceding claims, wherein said thin film layer is applied with a density such that less than 4 mg of the energy absorbing material is required for an area equivalent to a twelve inch diameter optical disk.

8.   A medium in accordance with any one of the preceding claims, wherein said particles are prepared by means of vacuum deposition by a method including thermal evaporation, sputtering or ion-beam deposition.

9.   A medium in accordance with any one of the preceding claims, wherein said substrate comprises a material selected from polymethyl methacrylate (PMMA), glass, polycarbonate and aluminium.

FIG.1

16'

11

10

FIG.2

11

12

10

16

FIG.3

11

14

15

10

0083396

**FIG.4**

**FIG.5**

**FIG.6**

FIG. 7.1

A－10Å

├──┤
1000Å

FIG. 7.2

B－20Å

FIG. 7.3

C = 30 Å

⊢——⊣
1000Å

FIG. 7.4

D = 40Å

FIG. 8.1

FIG. 8.2

# FIG. 9

FIG. 10

7/12

0083396

50% THRESHOLD POWER (nm) vs Au THICKNESS (nm)

× 40 ns
○ 100 ns
□ 200 ns

λ = 647.1 nm

0083396

# FIG. 11

Au TRILAYER
PHOTORESIST SPACER

25 nm Te
PMMA SUBSTRATE

Au TRILAYER
PMMA SPACER

PULSE POWER (mW)

PULSE WIDTH (ns)

FIG. 12

FIG. 13

RELATIVE CONTRAST

POWER (mw)

✕ — 25Å Au ON PMMA

△ — 250Å Te ON PMMA

10/12

0083396

0083396

FIG. 14

0083396

15 mw REFLECTION

FIG. 15.1

7.5 mw REFLECTION

FIG. 15.3

200 n sec.

15 mw TRANSMISSION

FIG. 15.2

200 n sec.

7.5 mw TRANSMISSION

FIG. 15.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 082 549 (HAAS et al.)<br><br>*Abstract; figures 1,2; column 2, line 62 to column 3, line 42; column 4, lines 1-46; column 5, lines 6-26*<br><br>--- | 1,3,8,9 | G 11 B 7/24<br>B 41 M 5/26 |
| D,X | JOURNAL OF VACUUM SCIENCE AND TECHNOLOGY, vol. 18, no. 1, January-February 1981, pages 87-91;<br>J.DREXLER: "DREXON optical memory media for laser recording and archival data storage". *Page 87, abstract; pages 88-89, section D; pages 89,90, section F*<br><br>--- | 1,2,9 | |
| X | GB-A-2 061 595 (RCA CORPORATION)<br>*Abstract, last two sentences; page 1, lines 101-107; page 2, lines 28-37, 47-57; page 3, lines 5-36; page 5, claims 5,6 *<br><br>--- | 1-3,5,6,9 | |
| | | | TECHNICAL FIELDS SEARCHED (Int. Cl. 3)<br><br>G 11 B<br>B 41 M<br>G 11 C<br>G 03 C |
| A | US-A-3 665 483 (BECKER et al.)<br>*Abstract; column 1, line 51 to column 2, line 5; column 2, lines 22-30,40-42,61-74; column 3, lines 34-66; column 4, line 70 to column 5, line 4*<br><br>---      -/- | 2,6,8 | |

The present search report has been drawn up for all claims

| Place of search | Date of completion of the search | Examiner |
|---|---|---|
| THE HAGUE | 08-04-1983 | OLDROYD D.L. |

European Patent
Office

**EUROPEAN SEARCH REPORT**

0083396

EP 82 10 9187

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | DE-A-2 921 262 (RCA CORPORATION) *Claims; page 6, lines 24-29; page 7, lines 18-21; page 8, lines 10-15* | 2,8,9 | |
| | --- | | |
| A | EP-A-0 023 102 (XEROX CORPORATION) *Abstract; page 3, line 18 to page 6, line 8; page 8, line 14 to page 9, line 35; page 10, lines 17-20; claim 1* | 2,5,6 | |
| | ----- | | |

TECHNICAL FIELDS
SEARCHED (Int. Cl. ³)

The present search report has been drawn up for all claims

| Place of search | Date of completion of the search | Examiner |
|---|---|---|
| THE HAGUE | 08-04-1983 | OLDROYD D.L. |